# EUROPÄISCHE PATENTSCHRIFT

(11) **EP 3 860 822 B1**
(45) Veröffentlichungstag und Bekanntmachung des Hinweises auf die Patenterteilung: **06.08.2025**
(21) Anmeldenummer: 19790125.9
(22) Anmeldetag: 02.10.2019
(51) Int. Cl.: B29B 7/48, B29B 7/60, B29B 7/72, B29B 7/84, B29B 7/86, B29B 7/90, B29B 7/94, B29C 48/25, B29C 48/40, B29C 48/76, B29C 48/92, C08J 3/205, B29B 7/46

(54) **VERFAHREN ZUR HERSTELLUNG VON POLYMEREN, IN WELCHEN FÜLLSTOFFE EINGEARBEITET UND HOMOGEN VERTEILT SIND**
METHOD FOR PRODUCING POLYMERS IN WHICH FILLERS ARE INCORPORATED AND HOMOGENEOUSLY DISTRIBUTED
PROCÉDÉ POUR FABRIQUER DES POLYMÈRES DANS LESQUELS DES CHARGES SONT INCORPORÉES ET RÉPARTIES DE MANIÈRE HOMOGÈNE

(30) Priorität: 04.10.2018 DE 102018124523
(43) Veröffentlichungstag der Anmeldung: 11.08.2021
(73) Patentinhaber: Gneuss GmbH, 32549 Bad Oeynhausen (DE)
(72) Erfinder: GNEUSS, Daniel, Charlotte, NC, 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2019/100865
(87) Internationale Veröffentlichungsnummer: WO 2020/069701

(56) Entgegenhaltungen:
- EP-A2- 0 477 634
- WO-A1-2011/060839
- US-A1- 2002 077 443
- "Direktprozess zur Herstellung von Nanosuspensionen und deren Zudosierung in thermoplastische Matrices zur Herstellung von Nanocomposites ; [NanoDirekt]", 31 December 2011, MIKONSAARI, IRMA, Fraunhofer, ISBN: 978-3-8396-0219-5, article MIKONSAARI IRMA: "Direktprozess zur Herstellung von Nanosuspensionen und deren Zudosierung in thermoplastische Matrices zur Herstellung von Nanocomposites", pages: 1 - 231, XP055163097
- ANONYMOUS: "Reversible Polymerization", 12 October 2019 (2019-10-12), pages 1 - 4, XP055651186, Retrieved from the Internet <URL:https://polymerdatabase.com/polymer%20chemistry/Reversible%20Polymerization.html> [retrieved on 20191210]

## Beschreibung

Die Erfindung betrifft ein Verfahren zur Herstellung von Polymeren, in welchen Füllstoffe eingearbeitet und homogen verteilt sind, mit den Merkmalen des Oberbegriffs des Anspruchs 1.

Es ist bereits bekannt, die Eigenschaften wie Aussehen, Haptik, Leitfähigkeit, Festigkeit usw. von Kunststoffen durch Einbringen von Füllstoffen in eine entsprechende Kunststoffschmelze zu beeinflussen. Dabei ist festzustellen, dass mit abnehmendem Partikeldurchmesser des Füllstoffes das Verhältnis von Oberfläche zu Volumen des Füllstoffes zunimmt. Da dieses Verhältnis oder die Oberfläche der Füllstoffe in einer Reihe von Anwendungen die Eigenschaften der Kunststoffe wesentlich bestimmt, ist es häufig notwendig, möglichst feine Partikel zu verwenden. Dabei ist dafür Sorge zu tragen, dass die Partikel nicht verklumpen, da bei verklumpten Partikeln das oben erwähnte Verhältnis bzw. die aktive Oberfläche wieder kleiner würde. Oft ist man bestrebt, sogenannte Nanoteilchen mit Durchmessern kleiner 100nm einzusetzen. Wegen der Zunahme des Oberflächen-Volumen-Verhältnisses wird es bei abnehmender Teilchengröße immer schwieriger, eine Agglomeratbildung der Füllstoffe zu verhindern, so dass klassische Methoden, wie z.B. aus der DE 10 2009 013 418 A1 bekannt, nach denen Nanopartikel in Form von Pulver in die Schmelze eingemischt werden, sich in der Praxis als nicht geeignet erweisen.

Es ist aber auch bekannt, Füllstoffe aufweisende Suspensionen in eine Schmelze einzubringen und nach Vermischen der Suspension mit der Schmelze den flüssigen Bestandteil der Suspension der Schmelze zu entziehen.

Aus der WO 2011/ 060 839 A1 ist ein Verfahren zur Herstellung von feinst verteilte Füllstoffe aufweisenden Polymeren bekannt. Einem Doppelschneckenextruder wird über den Trichter Polymer-Eingangsmaterial zugeführt und darin unter Druckaufbau gefördert und erschmolzen. Nach dem Druckaufbau wird in der Förder- und Mischzone eine Füllstoffsuspension in die Schmelze injiziert, wobei der Schmelzedruck über dem Dampfdruck liegt. Nach dem homogenen Vermischen von Polymer und Füllfstoffsuspension wird die Mischung am Ende einer Förder- und Mischstrecke in einer Entgasungseinrichtung entgast, wobei das Lösungsmittel verdampft.

Das Verfahren eignet sich aber nicht für mittel bis hochviskose Polymere, denn einer homogenen Durchmischung des Polymers mit dem Füllstoff steht die im Vergleich zur Trägerflüssigkeit hohe Viskosität der Schmelze entgegen. Trotz der Dispersion der Füllstoffe in einem flüssigen Lösungsmittel kann ein hoher Durchmischungs- und Verteilungsgrad nur durch Verwendung von besonderen mechanischen Rühr- und Mischvorrichtungen, also mit viel Antriebsleistung und Druck, erreicht werden.

Bei dem in DE 2 409 541 A beschriebenen Verfahren werden Füllstoffe in eine polymere, klebrige Grundsubstanz dadurch eingebracht, dass die Füllstoffe fein zerkleinert und in einem Verhältnis von 1:7 zur Grundsubstanz in diese eingemischt werden. Das Einmischen erfolgt über mechanische Mischvorrichtungen wie Rühr- und Knetmaschinen.

DE 10 2005 025 975 A1 beschreibt die Herstellung hochmolekularer Polymere durch Festphasenkondensation. Dieses Verfahren ist nicht im Durchlaufbetrieb in einem Extruder durchführbar. Ein Zusammenhang mit der Einmischung feinster Füllstoffe ist nicht beschrieben.

GB 1 373 155 A beschreibt die gezielte Depolymerisation von Gummi- und Kunststoffabfällen in einem Mehrschneckenextruder, wobei die Extruderschnecken in einer Ebene nebeneinander angeordnet sind. Ein Zusammenhang mit der Einmischung feinster Füllstoffe ist auch hier nicht gegeben.

Weitere Verfahren gemäß dem Stand der Technik werden in EP 0 477 634 A2, US 2002/077443 A1 und in "Direktprozess zur Herstellung von Nanosuspensionen und deren Zudosierung in thermoplastische Matrices zur Herstellung von Nanocomposites" von Mikonsaari Irma (XP055163097) beschrieben.

Der Erfindung liegt die Aufgabe zugrunde, ein Verfahren zur Herstellung eines gefüllten Polymers anzugeben, das mit feinst verteilten Füllstoffen mit Partikelgrößen kleiner 10 µm wie z.B. Nanopartikel gefüllt ist, durch welches Verfahren die Füllstoffe schnell, mit geringem Energieaufwand und besonders gleichmäßig in eine mittel- bis hochviskose Polymer-Schmelzen eingemischt werden können, ohne eine Schädigung des Polymers zu verursachen.

Zur Lösung der Aufgabe wird das Verfahren mit den Merkmalen des Anspruchs 1 vorgeschlagen.

Während üblicherweise bei der Weiterverarbeitung darauf geachtet wird, ein einmal hergestelltes Polymer nicht nachteilig zu verändern, geht die Erfindung genau diesen Schritt: es wird ein durch eine Rückreaktion in Monomere spaltbares Polymer verwendet, um die Füllstoffe aufzunehmen, und es wird als Trägerflüssigkeit für die Füllstoffe genau dasjenige niedermolekulare Spaltprodukt verwendet, das bei der Bildungsreaktion abgespalten wird. Somit wird nach der Erfindung bewusst die Rückreaktion eingeleitet, so dass vor und/oder während der Einmischung der Füllstoffe und der Homogenisierung der Suspension eine Depolymerisierung erfolgt, welche die Viskosität des Polymers reduziert.

Für die Erfindung können als Polymer alle Polykondensate verwendet werden, bei denen unter den bei einer Schmelzeextrusion einstellbaren Bedingungen, z. B. hinsichtlich Temperatur und Druck, die Rückreaktion zur Polykondensation eingeleitet werden kann, sobald das Abspaltprodukt als Trägerflüssigkeit zugegeben wird. Als Kunststoffe kommen somit Polyester, Polyamide und Polycarbonate in Betracht und als Trägerflüssigkeit Wasser oder ein- oder mehrwertige Alkohole.

Die meisten in der Kunststofftechnik wichtigen Polykondensate spalten bei ihrer Synthese Wasser ab, so dass durch spätere Wasserzugabe die Hydrolyse als Rückreaktion eingeleitet wird. Dementsprechend wird die Erfindung nachfolgend unter Betrachtung von Wasser als Trägerflüssigkeit für die Suspension beschrieben, auch wenn andere geeignete Trägerflüssigkeiten ebenso von der Erfindung mit umfasst sind.

Wenn nun die Trägerflüssigkeit in das zuvor aufgeschmolzene Polymer injiziert wird, egal ob die Trägerflüssigkeit schon als Suspension mit den Füllstoffen injiziert wird oder zunächst noch in reiner Form, so setzt unter der Wirkung von Druck und Temperatur im Doppelschneckenextruder sofort eine Hydrolyse oder sonstige Rückreaktion ein. Lange Polymerketten werden geteilt, und die Viskosität sinkt massiv. In der Folge verwischen die Viskositätsunterschiede zwischen der einzuspritzenden Suspension und der inzwischen niedrig viskosen Polymerschmelze. In diesem Stadium kann sehr gut und schnell und nur mit geringer zum Rühren und Mischen benötigten mechanischen Antriebsleistung eine homogene Verteilung erreicht werden. Zwar muss einerseits die am Ende auschlaggebende homogene Verteilung der Füllstoffe im Polymer erreicht werden, aber auch eine homogene Verteilung der restlichen Trägerflüssigkeit muss erreicht werden, damit es bei der sich anschließenden Entfernung der Trägerflüssigkeit nicht zu lokalen Entmischungen kommt.

Dadurch, dass die Schmelze in dieser Verfahrensphase eine wesentlich niedrigere Viskosität aufweist, lassen sich die Füllstoffe gut in die Schmelze einmischen, so dass schnell eine homogene Mischung der Füllstoffe, wie z.B. Nanopartikel, mit der Schmelze entsteht. Die Füllstoffe verbleiben in der Suspension, bis sie mit der Schmelze in Kontakt kommen, d.h. es erfolgt kein vorheriges Verdampfen des wässrigen Trägermediums. Die Füllstoffe agglomerieren während des injektions- und Mischprozesses nicht.

Die Bezeichnung "Schmelze" im Zusammenhang mit der vorliegenden Erfindung bezeichnet nicht nur die noch verbleibenden polymeren Anteile in aufgeschmolzener Form, sondern auch die möglicherweise infolge der bereits durchgeführten Rückreaktion in der Mischung zunehmend enthaltenen aufgespaltenen Polymermoleküle und monomeren Anteile.

Die im nächsten Schritt durchzuführende Entfernung der Trägerflüssigkeit geht damit einher, dass die Viskosität der Polymerschmelze wieder deutlich erhöht wird. Denn indem beispielsweise Wasser, das die Trägerflüssigkeit für die Füllstoffe bildet, der Mischung von Polymeren, Monomeren, Füllstoffen und eben Trägerflüssigkeit entzogen wird, wird deutlich mehr als nur eine mechanische Abscheidung der Trägerflüssigkeit bewirkt. Durch Entfernung des Wassers bei gleichzeitig fortwährendem Einfluss von Druck und Temperatur setzt vielmehr wieder eine Polykondensation als chemische Bildungsreaktion ein, wodurch Molekülketten wieder miteinander verbunden oder mit Monomeren verlängert werden , so dass die Viskosität ansteigt.

Der Grundgedanke der Erfindung liegt also darin, eine Flüssigkeit nicht nur als temporären Träger der Füllstoffe zu nutzen, sondern gleichzeitig zur vorübergehenden chemischen Veränderung desjenigen Polymers, in das die Füllstoffe eingemischt werden sollen. Dadurch ist temporär die feine Durchmischung leicht erreichbar, und am Ende kommt das Polymer mit den alten Eigenschaften wie zuvor oder sogar mit einer für den jeweiligen Anwendungszweck angepassten und damit optimierten Viskosität wieder aus dem Prozess heraus.

Zur Durchführung des Verfahrens ist vorgesehen, Polymer-Eingangsmaterial über einen Eingangstrichter in einen Doppelschneckenextruder einzugeben und anschließend das Polymer-Eingangsmaterial im Doppelschneckenextruder zu erschmelzen. Darauffolgend wird im Doppelschneckenextruder über eine Förder- und Mischstrecke ein Druck in der Schmelze aufgebaut. Nach Aufbau des Drucks wird in einer im Anfangsbereich der Förder- und Mischstrecke angeordneten Zuspritzkammer eine aus den Füllstoffen und einer Trägerflüssigkeit bestehende Suspension in die Schmelze injiziert, wobei der Druck im Doppelschneckenextruder bzw. in der Zuspritzkammer in Abhängigkeit von Polymer-Eingangsmaterial und Suspension im Bereich 50 bar, bevorzugt 25 bar, und insbesondere auf etwa 5 bar oberhalb bis unterhalb der Phasenumwandlungsgrenze der Trägerflüssigkeit eingestellt oder geregelt wird. Dadurch wird die Suspension mit dem Polymer-Eingangsmaterial unter Erniedrigung der Schmelze-Viskosität homogen vermischt, und die homogene Polymer-Mischung wird am Ende der Förder- und Mischstrecke in einen Entgasungsextruder überführt. Dabei wird in dem Entgasungsextruder durch Anlegen eines Vakuums die Trägerflüssigkeit unter Erhöhung der Schmelze-Viskosität aus der Polymer-Mischung verdampft und abgeführt, während die Füllstoffe in der Polymer-Mischung homogen verteilt bleiben, so dass eine feinst verteilte Füllstoffe aufweisende Polymer-Schmelze entsteht, die anschließend aus dem Entgasungsextruder abgegeben wird.

Von Vorteil ist, wenn über eine Regelvorrichtung ein Anfahrprozess initiiert wird, bei dem in die Förder- und Mischstrecke zunächst nur Trägerflüssigkeit injiziert wird, so dass das Polymer-Eingangsmaterial niedrigviskoser wird, und dass nach anschließendem Umschalten durch die Regelvorrichtung von Trägerflüssigkeit-Injektion auf Suspensions-Injektion die Suspension gleich in die niedrigviskose Schmelze eingemischt werden kann. Dadurch wird erreicht, dass entgegen der üblichen Ver- und Bearbeitungsweise von z.B. Polyester dieses durch Wasserinjektion niedrigviskos wird. Beim Umschalten von der Wasserinjektion auf die wässrige Suspension können somit die Füllstoffpartikel umgehend und ohne großen Kraftaufwand sehr gut in die niedrigviskose Schmelze eingemischt werden. Der wässrige Bestandteil der Suspension sorgt dafür, dass das nachgeschobene und frisch aufgeschmolzene Polymer-Material durch eine hier gewollte, üblicherweise jedoch möglichst vermiedene Hydrolyse ebenfalls niedrigviskoser wird, woraus sich der Vorteil des leichten und guten Einarbeitens der Füllstoffpartikel in die Polymer- Schmelze ergibt.

Es hat sich bewährt, dass der Druck in der Zuspritzkammer zwischen 20 bar und 200 bar geregelt wird, wobei ein Drucksensor in der Zuspritzkammer die Druck-Istwerte an die Regelvorrichtung gibt, welche den Soll-Druck durch Beeinflussung einer einstellbaren Schmelze-Drossel, die zwischen dem Doppelschneckenextruder und dem Entgasungsextruder angeordnet ist, und/oder einer Suspensionspumpe vorgibt.

Von Vorteil ist, dass bei vorgegebener Durchflussmenge und Durchflussgeschwindigkeit die Regelvorrichtung durch Einstellung des Unterdrucks die Evakuierungsleistung im Entgasungsextruder regelt, wodurch die Viskosität der ausgetragenen Schmelze einstellbar ist.

Ein besonderer Vorzug ergibt sich, wenn die Zeit zwischen Suspensions-Injektion und Evakuierungsbeginn mehr als 1 Sekunde und weniger als 30 Sekunden beträgt.

Der Umkehrung der Viskosität von niedrigviskos auf hochviskos durch Entzug des Wassers sind materialabhängig zeitliche Grenzen gesetzt. Wird die Zeit zwischen der Injektion des Wassers bzw. der wässrigen Suspension und dem Entgasungsvorgang zu groß, lässt sich die Viskosität nicht mehr im gewünschten Maße reversieren, so dass das Zeitfenster größer 1 Sekunde und weniger als 30 Sekunden eingehalten werden sollte.

Bedeutsam ist, dass durch die Evakuierung mindestens 90 %, vorzugsweise mindestens 99 % der Trägerflüssigkeit innerhalb von 1 bis 10 Sekunden aus der Schmelze entzogen werden. Dieses schnelle Entziehen der Trägerflüssigkeit in einer Stufe ist notwendig, um sicherzustellen, dass die Umkehrung der Viskosität von niedrigviskos auf hochviskos durchgeführt werden kann, ohne dass die Schmelze Schaden nimmt. So darf eine Addition des Zeitfensters zum Einmischen der wässrigen Suspension in die Schmelze und der Abschluss des anschließenden Evakuierens ca. 30 Sekunden nicht überschreiten, da ansonsten je nach verwendetem Polymer Schäden an diesem zu verzeichnen sind.

Um ein derartig schnelles Entgasen der Schmelze zu erreichen, ist es zweckmäßig, das Vakuum am Entgasungsextruder zwischen 40 mbar und 0,01 mbar einzustellen.

Es hat sich bewährt, dass die zugeführte Suspensionsmenge zwischen 0,02 und 25 Volumenprozent der Polymermenge beträgt.

Dadurch lässt sich die nach der Erfindung bewusst hervorgerufene, üblicherweise jedoch zu vermeidende Hydrolyse so steuern, dass am Ende die gewünschte Viskosität der Füllstoffpartikel aufweisenden Polymer-Schmelze erhalten werden kann.

Zur optimalen Aufrechterhaltung bzw. besseren Regelung des Drucks in dem Doppelschneckenextruder wird vorgeschlagen, dass im Bereich der Zuspritzkammer inertes Gas zudosiert wird. Dabei kann es sich um Kohlendioxid, Stickstoff oder aber auch um ein Edelgas handeln, wobei z.B. Kohlendioxid auf den Prozess der Homogenisierung positiv einwirkt, da sich Kohlendioxid sowohl im Wasser als Trägerflüssigkeit als auch in der Polymer-Schmelze in größeren Mengen löst, und - wie schon das Wasser - die Viskosität der Schmelze zusätzlich reduziert und den Phasenübergang des Wassers von flüssig zu gasförmig wesentlich beeinflusst.

Vorrichtungsmäßig wird die Aufgabe insbesondere durch eine Kaskadenschaltung eines Doppelschneckenextruders zum Erschmelzen von Polymer-Ausgangsmaterial und zum Mischen mit einer Suspension mit einem einschächtigen Entgasungsextruders gelöst, wobei der Kaskadenschaltung eine Regelvorrichtung zugeordnet ist, die sowohl das Anfahren der Kaskadenschaltung als auch die eigentliche Produktion des feinst verteilte Füllstoffe aufweisenden Polymere regelt.

Durch die Kaskadenschaltung eines Doppelschneckenextruders zum Erschmelzen und Mischen, der ohne Vakuumanschluss kostengünstig zu erstellen und ohne Vakuum günstig zu betreiben ist, und eines Entgasungsextruders werden zwei getrennt voneinander antreibbare Extruder verwendet, die jeder für sich auf optimaler Drehzahl und Leistungsaufnahme geregelt werden können, so dass im Doppelschneckenextruder optimale Bedingungen für das Erschmelzen des Eingangsmaterials, das Einbringen der Suspension sowie das Mischen im Entgasungsextruder die optimalen Eigenschaften für das Entziehen der Trägerflüssigkeit eingestellt werden können.

Von Vorteil ist dabei, dass der Entgasungsextruder einen in einer Evakuierungstrommel angeordneten Mehrschneckenextruderteil aufweist, der im Wesentlichen aus einem drehbar angetriebenen, die mehreren Schnecken in zylinderförmigen Ausnehmungen aufnehmenden Führungskörper besteht, wobei die zylinderförmigen Ausnehmungen des Führungskörpers die Schnecken in ihrer jeweiligen Längsausdehnung größer 180° und kleiner 360° umschließen, und die so entstehenden Öffnungsschlitze auf die Wandung der Evakuierungstrommel ausgerichtet sind, und wobei die Schnecken in dem Führungskörper über Zahngetriebe drehangetrieben sind.

Der Einsatz eines Entgasungsextruders, wie er im Wesentlichen aus der EP 1 434 680 B1 bekannt ist, gewährleistet, dass die Schmelze während des Transports durch den Mehrschneckenextruderteil einen großen Oberflächenaustausch erfährt, wodurch das Vakuum großflächig mit der Schmelze in Kontakt kommen kann, so dass in der Schmelze enthaltene Wasser sehr schnell verdampfen und der Schmelze effektiv entzogen werden kann.

Vorteilhaft ist, dem Doppelschneckenextruder im Bereich der Zuspritzkammer mindestens eine permanent offene Einspritzdüse zu zuordnen und die Einspritzdüse/n mit einer Trägerflüssigkeitszuführung und / oder mit einer Suspensionspumpe zu verbunden, wobei die Suspensionspumpe mit einem, ein Rührwerk aufweisenden Suspensionssilo gekoppelt ist.

Damit die Füllstoffpartikel in der Suspension nicht ausfallen oder ggf. agglomerieren, ist zunächst der Einsatz eines Rührwerks vorgesehen. Aber auch der Einsatz der offenen Einspritzdüse, die der Suspensionen kein weiteres Hindernis bietet, an dem es zur Agglomeration der Füllstoffpartikel kommen könnte, trägt dazu bei, dass tatsächlich Füllstoffe mit Partikelgrößen kleiner 10 µm vorzugsweise Nanopartikel mit Partikelgrößen im Bereich 200 nm bis 300 nm und nicht Agglomerate von Füllstoffpartikeln in die Schmelze gelangen, so dass damit eine besonders schnelle Einmischung der Füllstoffpartikel, und eine gute homogene Mischung der Schmelze mit den Füllstoffpartikeln möglich ist.

Vorteilhaft ist auch, die mindestens eine Einspritzdüse gegenüber der Zuspritzkammer thermisch zu isolieren und / oder separat zu temperieren. Dadurch ist gewährleistet, dass die Trägerflüssigkeit der Suspension, z.B. Wasser, nicht eventuell doch schon zu verdampfen beginnt, bevor die Suspension den Innenraum des Doppelschneckenextruders erreicht.

Die Erfindung wird anhand einer Zeichnung näher erläutert.

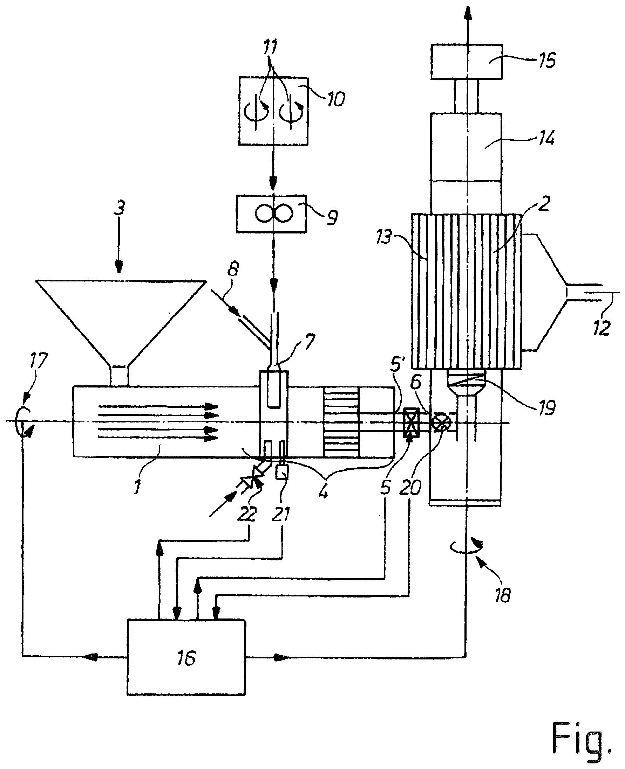

Die Figur 1 zeigt einen Doppelschneckenextruder 1 sowie einen Entgasungsextruder 2, die beide in Kaskadenform hintereinandergeschaltet sind. Der Doppelschneckenextruder weist einen Eingangstrichter 3 auf, über den Polymer-Eingangsmaterial gravimetrisch dem Doppelschneckenextruder zugeführt werden kann. Im Doppelschneckenextruder 1 wird das Polymer-Eingangsmaterial plastifiziert und über eine Förder- und Mischstrecke 4 zum Ausgang 5' des Doppelschneckenextruders 1 transportiert. Der Ausgang 5' des Doppelschneckenextruders 1 geht über eine Drossel 5 direkt in den Eingang 6 des Entgasungsextruders 2 über.

Im Bereich der Förder- und Mischstrecke 4 weist der Doppelschneckenextruder 1 eine Zuspritzkammer 7 mit Einspritzdüse 7' auf, die von einer Wasserzuführung 8 bzw. einer Suspensionspumpe 9 gespeist werden kann, wobei die Suspensionspumpe 9 die Suspension aus einem Suspensionssilo 10 abzuziehen vermag. Das Suspensionssilo 10 weist Rührwerke 11 auf, über welche die Füllstoffpartikel möglichst gleichmäßig in der Suspension verteilt bleiben, ohne dass es zur Agglomeration der Füllstoffpartikel in der Suspension kommt.

Der Entgasungsextruder 2 weist einen Vakuumanschluss 12 auf, d.h. in diesem Fall nur einen Entgasungsschacht, über den im Bereich einer Evakuierungstrommel 13 die aus dem Doppelschneckenextruder 1 in den Entgasungsextruder 2 geförderte Schmelze entgast werden kann.

Die Schmelze wird über einen Austrag 14, z. B. eine Schnecke oder Pumpe, einem Austragwerkzeug 15 zugeführt.

Eine Regelvorrichtung 16 ist mit dem Antrieb 17 des Doppelschneckenextruders 1 sowie mit dem Antrieb 18 des Entgasungsextruders 2 gekoppelt. Damit lassen sich der Plastifizier- und Mischvorgang, sowie der Entgasungsvorgang getrennt voneinander und jeweils für sich optimal regeln. Über die Regelvorrichtung 16 werden, im Einzelnen nicht dargestellt, auch der Einzug des Eingangstrichter 3, die Suspensionspumpe 9, das Rührwerk 11, die Wasserzuführung 8, einstellbare Förder- und Scherelemente 19 des Entgasungsextruders 2, der Vakuumanschluss 12, oder der Austrag 14 geregelt. Aber auch weitere, nicht dargestellte Sensoren, wie z. B. die Druckerfassung 20 oder Druckmesser am Vakuumanschluss, Temperaturfühler, Drehzahlmesser usw. geben Signale auf die Regelvorrichtung 16, über welche sowohl das Anfahren als auch die Produktion über die Kaskadenschaltung geregelt wird.

Im Doppelschneckenextruder 1 wird zunächst das Polymer-Eingangsmaterial plastifiziert und über die Förder- und Mischstrecke 4 zum Ausgang 5 transportiert. Die Regelvorrichtung 16 regelt dabei den Antrieb 17 bezüglich Drehzahl und Leistung sowie in Abhängigkeit der Signale eines Drucksensors 21 die Drossel 5 bezüglich des Druckaufbaus in der Förder- und Mischstrecke 4.

Über einen ebenfalls von der Regelvorrichtung 16 regelbaren Gasanschluss 22 kann Inertgas in die Zuspritzkammer 7 unter entsprechend regelbarem Druck eingespeist werden, um die Viskosität der Schmelze noch besser beeinflussen zu können.

Für den Anfahrprozess wird über die Regelvorrichtung 16 zunächst die Wasserzuführung 8 eingeschaltet, während die Suspensionspumpe 9 noch nicht angetrieben wird. Nachdem auf der Förderstrecke ein entsprechender Druck aufgebaut ist, der durch den Drucksensor 21 ermittelt werden kann, und die Polymer-Schmelze durch die Wasserzufuhr eine gewünscht niedrige Viskosität aufweist, wird über die Regelvorrichtung 16 die Wasserzufuhr 8 abgeschaltet und die Suspensionspumpe 9 eingeschaltet, so dass anschließend durch die Suspensionspumpe 9 die Suspension aus dem Suspensionssilo 10 in den Doppelschneckenextruder 1 gefördert werden kann. Hier wird die Suspension unter Regelung der Drehzahl und der Leistung des Antriebs 17 möglichst optimal in die Polymer-Schmelze eingemischt. Nachdem die so gemischte Polymer-Schmelze den Doppelschneckenextruder 1 verlassen hat, wird die Schmelze über Förder- und Scherelemente 19 in die Evakuierungstrommel 13 des Entgasungsextruders 2 gegeben. Die Förder- und Scherelemente 19 und die Signale der Druckerfassung 20 dienen dabei dazu, die Schmelze vor dem Eintritt in die Evakuierungstrommel 13 so zu dosieren, dass in der Evakuierungstrommel eine optimale Menge an Schmelze vorliegt, die hier über Schnecken umgewälzt und transportiert wird, wobei die Schmelze dem Vakuum eine möglichst große und sich ständig erneuernde Oberfläche bietet, so dass die Entgasung der Schmelze sehr schnell und effektiv erfolgen kann. Dadurch wird, obwohl über die Evakuierungstrommel auch Scherkräfte in die Schmelze eingebracht werden, die Kettenlänge der Polymermoleküle wieder länger. Die Polymer-Schmelze wird höher viskos. Über die Einstellung des Vakuums mittels der Regelvorrichtung 16 lässt sich bei voreingestellter Durchflussmenge und Durchflussgeschwindigkeit die gewünschte Viskosität der Polymer-Schmelze einstellen.

Am Ende der Evakuierungstrommel wird die Schmelze über den Austrag 14, dem Austragwerkzeug 15 zugeführt.

### Bezugszeichenliste

- 1: Doppelschneckenextruder
- 2: Entgasungsextruder
- 3: Eingangstrichter
- 4: Förder- und Mischstrecke
- 5: Drossel
- 5': Ausgang
- 6: Eingang
- 7: Zuspritzkammer
- 7': Einspritzdüse
- 8: Wasserzuführung
- 9: Suspensionspumpe
- 10: Suspensionssilo
- 11: Rührwerk
- 12: Vakuumanschluss
- 13: Evakuierungstrommel
- 14: Austrag
- 15: Austragwerkzeug
- 16: Regelvorrichtung
- 17: Antrieb
- 18: Antrieb
- 19: Förder- und Scherelemente
- 20: Druckerfassung
- 21: Drucksensor
- 22: Gasanschluss

## Patentansprüche

1. Verfahren zur Herstellung von Polymeren, in welchen Füllstoffe eingearbeitet und homogen verteilt sind, wobei:
- die Partikelgrößen der Füllstoffe kleiner 10 µm sind;
- ein Polymer-Eingangsmaterial in einen Doppelschneckenextruder (1) eingegeben und dort zu einer Schmelze aufgeschmolzen wird,
- in einer Förder- und Mischstrecke (4) eine Suspension, die aus den Füllstoffen und einer Trägerflüssigkeit besteht, in die Schmelze injiziert wird
**dadurch gekennzeichnet,**
- **dass** die Schmelzeviskosität durch Einspritzen der Trägerflüssigkeit in der Förder- und Mischstrecke (4) erniedrigt wird, indem als Polymer ein spaltbares Polykondensat und als Trägerflüssigkeit das bei der Polykondensation anfallende niedermolekulare Abspaltprodukt verwendet werden, so dass das aufgeschmolzene Polymer innerhalb der Förder- und Mischstrecke (4) wenigstens teilweise depolymerisiert wird;
- **dass** die Mischung, die aus der durch Aufspaltung in ihrer Viskosität reduzierten Schmelze, der restlichen Trägerflüssigkeit und den Füllstoffen besteht, homogenisiert wird,
- **dass** die Viskosität der Schmelze nach der Homogenisierung abschließend wieder erhöht wird, wozu ein Entgasungsextruder (2) verwendet wird, in welchem zur Viskositätserhöhung eine Polykondensation durchgeführt wird, indem ein Vakuum angelegt und das Abspaltprodukt mittels des Vakuums aus dem Entgasungsextruder (2) abgeschieden wird.

2. Verfahren nach Anspruch 1, **dadurch gekennzeichnet, dass** zur Einleitung der Abspaltung Trägerflüssigkeit in die Schmelze injiziert wird, bevor die Suspension injiziert wird.

3. Verfahren nach Anspruch 1 oder 2, **dadurch gekennzeichnet,**
- **dass** als Polymer ein hydrolysierbares Polykondensat und als Trägerflüssigkeit Wasser verwendet werden, so dass die Schmelze innerhalb der Förder- und Mischstrecke (4) hydrolysiert wird,
- **dass** die Mischung aus der durch Hydrolyse in ihrer Viskosität reduzierten Schmelze, des restlichen Wassers und den Füllstoffen homogenisiert wird, und
- **dass** die Viskosität der Schmelze nach der Homogenisierung abschließend wieder erhöht wird, wozu ein Entgasungsextruder (2) verwendet wird, in welchem zur Viskositätserhöhung eine Polykondensation durchgeführt wird, indem ein Vakuum angelegt und das Wasser mittels des Vakuums aus dem Entgasungsextruder (2) abgeschieden wird.

4. Verfahren nach Anspruch 3, **dadurch gekennzeichnet, dass** das Polymer ein Polyester ist.

5. Verfahren nach einem der Ansprüche 1 bis 4, **dadurch gekennzeichnet, dass** als Polymer ein unter Abspaltung eines einwertigen oder mehrwertigen Alkohols hergestelltes Polykondensat ist und als Trägerflüssigkeit ein einwertiger oder ein mehrwertiger Alkohol verwendet wird.

6. Verfahren nach einem der Ansprüche 1 bis 5, **dadurch gekennzeichnet,**
- **dass** eine Regelvorrichtung (16) die einzelnen Verfahrensschritte regelt, über welche ein Anfahrprozess initiiert wird, bei dem zunächst nur Trägerflüssigkeit in die Förder- und Mischstrecke (4) injiziert wird, so dass das Polymer-Eingangsmaterial niedrigviskoser wird, und
- **dass** nach anschließendem Umschalten durch die Regelvorrichtung (16) von Trägerflüssigkeit-Injektion auf Suspension-Injektion die Suspension in die niedrigviskose Schmelze eingemischt wird.

7. Verfahren nach einem der Ansprüche 1 bis 6, **dadurch gekennzeichnet, dass** der Druck in einer Zuspritzkammer (7) des Doppelschneckenextruders (1) zwischen 25 bar und 50 bar beträgt.

8. Verfahren nach Anspruch 7, **dadurch gekennzeichnet, dass** der Druck in der Zuspritzkammer (7) auf 5 bar oberhalb bis unterhalb der Phasenumwandlungsgrenze der Trägerflüssigkeit eingestellt oder geregelt wird.

9. Verfahren nach Anspruch 7 oder 8, **dadurch gekennzeichnet, dass** der Druck in der Zuspritzkammer (7) zwischen 20 bar und 200 bar geregelt wird, wobei ein Drucksensor (21) in der Zuspritzkammer (7) die Druck-Istwerte an die Regelvorrichtung (16) gibt, welche den Soll-Druck durch Beeinflussung einer einstellbaren Schmelze-Drossel (5), die zwischen dem Doppelschneckenextruder (1) und dem Entgasungsextruder (2) angeordnet ist und/oder einer Suspensionspumpe (9) vorgibt.

10. Verfahren nach einem der Ansprüche 7 bis 9, **dadurch gekennzeichnet, dass** im Bereich der Zuspritzkammer zur Aufrechterhaltung bzw. besseren Regelung des Drucks ein inertes Gas zudosiert wird.

11. Verfahren nach einem der Ansprüche 1 bis 10, **dadurch gekennzeichnet, dass** die Regelvorrichtung (16) die Evakuierungsleistung im Entgasungsextruder (2) durch Einstellung des Unterdrucks bei vorgegebener Durchflussmenge und Durchflussgeschwindigkeit regelt, wodurch die Viskosität der ausgetragenen Schmelze einstellbar ist.

## Claims

1. Process for the production of polymers in which there are fillers incorporated and homogeneously distributed, where:
- the particle sizes of the fillers are below 10 µm;
- a polymer starting material is input into a twin-screw extruder (1) and is melted there to give a melt, and
- in a conveying and mixing section (4), a suspension, which consists of the fillers and of a carrier liquid, is injected into the melt,
**characterized**
- **in that** the melt viscosity is reduced by injection of the carrier liquid in the conveying and mixing section (4) in that a cleavable polycondensate is used as polymer and low-molecular-weight cleavage product arising during the polycondensation is used as carrier liquid, and therefore the molten polymer is at least to some extent depolymerized within the conveying and mixing section (4);
- **in that** the mixture, which consists of the melt whose viscosity is reduced by cleavage, of the remainder of the carrier liquid and of the fillers, is homogenized, and
- **in that**, after the homogenization, the viscosity of the melt is finally in turn increased by use of a devolatilizing extruder (2) in which, for the viscosity increase, a polycondensation is carried out, in that a vacuum is applied and the cleavage product is removed from the devolatilizing extruder (2) by means of the vacuum.

2. Process according to Claim 1, **characterized in that**, before the suspension is injected, carrier liquid is injected into the melt in order to induce the cleavage.

3. Process according to Claim 1 or 2, **characterized**
- **in that** a hydrolysable polycondensate is used as polymer and water is used as carrier liquid, and therefore the melt is hydrolyzed within the conveying and mixing section (4);
- **in that** the mixture of the melt whose viscosity is reduced by hydrolysis, of the remainder of the water and of the fillers is homogenized, and
- **in that**, after the homogenization, the viscosity of the melt is finally in turn increased by use of a devolatilizing extruder (2) in which, for the viscosity increase, a polycondensation is carried out, in that a vacuum is applied and the water is removed from the devolatilizing extruder (2) by means of the vacuum.

4. Process according to Claim 3, **characterized in that** the polymer is polyester.

5. Process according to any of Claims 1 to 4, **characterized in that** a polycondensate produced with elimination of a monohydric or polyhydric alcohol is used as polymer, and a monohydric or polyhydric alcohol is used as carrier liquid.

6. Process according to any of Claims 1 to 5, **characterized**
- **in that** a control device (16) controls the individual process steps and initiates a start-up procedure in which initially only carrier liquid is injected into the conveying and mixing section (4) to reduce the viscosity of the polymer starting material, and
- **in that** after subsequent switchover by the control device (16) from carrier-liquid injection to suspension injection the suspension is incorporated into the low-viscosity melt.

7. Process according to any of Claims 1 to 6, **characterized in that** the pressure in an injection chamber (7) of the twin-screw extruder (1) is between 25 bar and 50 bar.

8. Process according to Claim 7, **characterized in that** the pressure in the injection chamber (7) is adjusted or controlled to 5 bar above to below the phase-transition boundary of the carrier liquid.

9. Process according to Claim 7 or 8, **characterized in that** the pressure in the injection chamber (7) is controlled to between 20 bar and 200 bar, where a pressure sensor (21) in the injection chamber (7) provides the actual pressure values to the control device (16), which sets the required pressure by influencing an adjustable melt-flow restrictor (5) arranged between the twin-screw extruder (1) and the devolatilizing extruder (2), and/or by influencing a suspension pump (9).

10. Process according to any of Claims 7 to 9, **characterized in that** an inert gas is added in the region of the injection chamber in order to maintain or improve control of the pressure.

11. Process according to any of Claims 1 to 10, **characterized in that** the control device (16) controls the evacuation rate in the devolatilizing extruder (2) by adjusting the reduced pressure for a specified flow rate and flow velocity, thus permitting adjustment of the viscosity of the discharged melt.

## Revendications

1. Procédé de fabrication de polymères, dans lesquels des charges sont incorporées et réparties de manière homogène, dans lequel :
- la taille de particules des charges est inférieure à 10 µm ;
- une matière première polymère est introduite dans une extrudeuse à double vis (1) et y est fondue en une masse fondue,
- dans une section de transport et de mélange (4), une suspension constituée des charges et d'un liquide porteur est injectée dans la masse fondue
**caractérisé**
- **en ce que** la viscosité de la masse fondue est réduite par injection du liquide porteur dans la section de transport et de mélange (4), en utilisant comme polymère un polycondensat clivable et comme liquide porteur le produit de clivage de faible poids moléculaire formé lors de la polycondensation, de telle sorte que le polymère fondu est au moins partiellement dépolymérisé dans la section de transport et de mélange (4) ;
- **en ce que** le mélange, constitué de la masse fondue dont la viscosité a été réduite par clivage, du liquide porteur restant et des charges, est homogénéisé,
- **en ce que** la viscosité de la masse fondue est finalement augmentée à nouveau après l'homogénéisation, à l'aide d'une extrudeuse de dégazage (2) dans laquelle une polycondensation est effectuée pour augmenter la viscosité, en appliquant un vide et en séparant le produit de clivage de l'extrudeuse de dégazage (2) au moyen du vide.

2. Procédé selon la revendication 1, **caractérisé en ce que**, pour déclencher le clivage, un liquide porteur est injecté dans la masse fondue avant l'injection de la suspension.

3. Procédé selon la revendication 1 ou 2, **caractérisé**
- **en ce qu'**un polycondensat hydrolysable est utilisé comme polymère et de l'eau comme liquide porteur, de telle sorte que la masse fondue est hydrolysée dans la section de transport et de mélange (4) ;
- **en ce que** le mélange de la masse fondue dont la viscosité a été réduite par hydrolyse, de l'eau restante et des charges est homogénéisé, et
- **en ce que** la viscosité de la masse fondue est finalement augmentée à nouveau après l'homogénéisation, à l'aide d'une extrudeuse de dégazage (2) dans laquelle une polycondensation est effectuée pour augmenter la viscosité, en appliquant un vide et en séparant l'eau de l'extrudeuse de dégazage (2) au moyen du vide.

4. Procédé selon la revendication 3, **caractérisé en ce que** le polymère est un polyester.

5. Procédé selon l'une quelconque des revendications 1 à 4, **caractérisé en ce qu'**un polycondensat produit par clivage d'un alcool monohydrique ou polyhydrique est utilisé comme polymère et un alcool monohydrique ou polyhydrique est utilisé comme liquide porteur.

6. Procédé selon l'une quelconque des revendications 1 à 5, **caractérisé**
- **en ce qu'**un dispositif de régulation (16) régule les étapes de procédé individuelles qui déclenchent un processus de démarrage au cours duquel seul le liquide porteur est d'abord injecté dans la section de transport et de mélange (4), de telle sorte que la matière première polymère devient moins visqueuse, et
- **en ce qu'**après une commutation consécutive par le dispositif de régulation (16) de l'injection de liquide porteur à l'injection de suspension, la suspension est mélangée dans la masse fondue de faible viscosité.

7. Procédé selon l'une quelconque des revendications 1 à 6, **caractérisé en ce que** la pression dans une chambre d'injection (7) de l'extrudeuse à double vis (1) est comprise entre 25 bars et 50 bars.

8. Procédé selon la revendication 7, **caractérisé en ce que** la pression dans la chambre d'injection (7) est régulée ou maintenue à 5 bars au-dessus ou en dessous de la limite de transition de phase du fluide porteur.

9. Procédé selon la revendication 7 ou 8, **caractérisé en ce que** la pression dans la chambre d'injection (7) est régulée entre 20 bars et 200 bars, un capteur de pression (21) dans la chambre d'injection (7) transmettant les valeurs réelles de pression au dispositif de régulation (16), qui prédétermine la pression de consigne en agissant sur un étranglement de masse fondue réglable (5) agencé entre l'extrudeuse à double vis (1) et l'extrudeuse de dégazage (2) et/ou sur une pompe de suspension (9).

10. Procédé selon l'une quelconque des revendications 7 à 9, **caractérisé en ce que**, dans la zone de la chambre d'injection, un gaz inerte est ajouté afin de maintenir ou de mieux réguler la pression.

11. Procédé selon l'une quelconque des revendications 1 à 10, **caractérisé en ce que** le dispositif de régulation (16) régule la puissance d'évacuation dans l'extrudeuse de dégazage (2) en régulant la dépression à un débit et une vitesse d'écoulement prédéfinis, ce qui permet de régler la viscosité de la masse fondue déchargée.
